# EUROPÄISCHE PATENTSCHRIFT

(11) **EP 1 437 211 B1**
(45) Veröffentlichungstag und Bekanntmachung des Hinweises auf die Patenterteilung: **24.04.2013**
(21) Anmeldenummer: 03028055.6
(22) Anmeldetag: 07.12.1999
(51) Int. Cl.: B29C 45/16, A46B 5/02, A46D 1/00

(54) **Verfahren zur Herstellung einer Zahnbürste**
Method for producing a toothbrush
Procédé pour produire une brosse à dents

(30) Priorität: 10.12.1998 CH 244898
(43) Veröffentlichungstag der Anmeldung: 14.07.2004
(62) Teilanmeldung aus: 99973269.6
(73) Patentinhaber: Trisa Holding AG, 6234 Triengen (CH)
(72) Erfinder: Huber, Beat, 6233 Büron (CH); Waldispühl, Peter, 6204 Sempach stadt (CH)
(74) Vertreter: Schaad, Balass, Menzl & Partner AG

(56) Entgegenhaltungen:
- EP-A- 0 561 051
- EP-A- 0 742 090
- WO-A-97/02770
- DE-A- 3 820 814
- DE-A- 19 535 134

## Beschreibung

Die Erfindung betrifft ein Verfahren zur Herstellung einer Zahnbürste gemäss dem Oberbegriff des Anspruches 1.

Zahnbürsten sind Massenartikel und müssen daher kostengünstig hergestellt werden können. Bekannt sind Zahnbürsten aus einem einzigen Kunststoff und Zahnbürsten aus zwei Kunststoffkomponenten, die z.B. im Zweikomponentenspritzverfahren hergestellt werden. Im letzteren Fall umfasst die Zahnbürste zwei Kunststoffteile: Ein erstes Kunststoffteil aus einem ersten Kunststoff, z.B. Polypropylen, erstreckt sich vom Griff der Zahnbürste bis zum Bürstenkopf und weist miteinander verbundene Ausnehmungen auf. Ein zweites Kunststoffteil aus einem zweiten Kunststoff, z.B thermoplastisches Elastomer, füllt die Ausnehmungen des ersten Kunststoffteils aus. Diese beiden Kunststoffe verbinden sich an der Berührungsfläche der beiden Kunststoffteile. Gegenüber einer Zahnbürste aus nur einem Kunststoff ergibt dies eine grössere Gestaltungsmöglichkeit. Da sich jedoch die beiden Kunststoffe während des Spritzgiessvorganges miteinander verbinden müssen, ist man bei der Auswahl der Kunststoffe und damit bei der Gestaltung der Zahnbürste eingeschränkt.

Eine Zahnbürste und ein Verfahren zur Herstellung einer Zahnbürste gattungsbildender Art ist aus der DE-A-195 35 134 bekannt. An einen Hauptkörper aus Kunststoff des Handgriffs einer Zahnbürste ist ein flexibler Kunststoff angespritzt. Um von vorneherein eine zuverlässige Verankerung des flexibleren Kunststoffs im Hauptkörper zu gewährleisten, ist der Hauptkörper mit einem zentralen Spritzkanal versehen, der von innen her mit äusseren Anspritzbereichen des flexibleren Kunststoffs an den Hauptkörper kommuniziert.

Es ist ferner in der Spritzgusstechnolgie allgemein bekannt, dass kraftschlüssige Verbindungen durch Schwindprozesse realisiert werden können. z.B. beim Umspritzen von sogenannten "Inserts" mit Kunststoff.

Der vorliegenden Erfindung liegt die Aufgabe zugrunde, ein Verfahren der eingangs genannten Art bereitzustellen, mit dem bei einer kostengünstigen Herstellung eine vielfältige Gestaltung von Zahnbürsten möglich ist.

Diese Aufgabe wird erfindungsgemäss mit einem Verfahren mit den Merkmalen des Anspruches 1 gelöst. Bevorzugte Weitergestaltungen des erfindungsgemässen Verfahrens bilden den Gegenstand der abhängigen Ansprüche.

Dadurch, dass die beiden Teile der Zahnbürste durch mindestens zwei aus verschiedenen, sich während des Spritzgiessvorganges miteinander nicht verbindenden Kunststoffen bestehende Formteile gebildet sind, die insbesondere miteinander in einer kraft- und/oder formschlüssigen Verbindung stehen, bieten sich viele Möglichkeiten für eine zweckmässige Gestaltung des Kunststoffgegenstandes. Es können Kunststoffe mit unterschiedlichem chemischen Charakter verwendet werden. Diese können sich mehr oder weniger stark in ihrer Strukturformel und ihren chemischen Bausteinen unterscheiden. An den Berührungsflächen müssen zwischen den Kunststoffen keinerlei chemische oder physikalische Bindungen z.B. in Form von Brückenbindungen oder von der Waalschen Kräften vorliegen. Allein die Reibungskräfte zwischen den Formteilen in der schwindverbindungsartig aufgebauten Verbindung reichen aus, um die beiden Formteile fest miteinander zu verbinden.

Durch die formschlüssige, mittels ineinandergreifenden Teile an den Berührungsflächen der beiden Formteile realisierte Verbindung wird verhindert, dass sich zwischen den beiden Formteilen während des Schwindvorganges Spalte bilden, in die Wasser und Verunreinigungen eindringen können, oder die gar zu einem Bruch führen könnten.

So können beispielsweise bei einer Zahnbürste am richtigen Ort Kunststoffe mit vorteilhaften Eigenschaften eingesetzt werden. Das eine Formteil kann z.B. aus Polypropylen bestehen (Polypropylen ist günstig, flexibel, chemisch resistent, jedoch nicht voll transparent erhältlich), während für das andere Formteil beispielsweise Styrol-Acryl-Nitril (SAN) gewählt werden kann (ebenfalls günstig, transparent, ästhetisch). Vorzugsweise wird das den Bürstenkopf tragende Formteil aus Polypropylen hergestellt, da Polypropylen gegen die oft aggressiven Stoffe der Zahnputzmittel resistent ist.

Vorzugsweise haben die zwei Kunststoffe ein unterschiedliches Schwindverhalten, da so eine feste Schwindverbindung leichter zu erreichen ist. In diesem Fall wird vorzugsweise in einem ersten Schritt dasjenige Formteil gespritzt, das aus Kunstoff mit dem geringeren Schwindmass hergestellt wird. In einem zweiten Schritt wird das zweite Formteil aus Kunstoff mit dem grösseren Schwindmass gespritzt, wodurch ein natürlicher Anpressdruck des zweiten Kunststoffes gegenüber dem ersten erzielt wird.

Die Erfindung wird im folgenden anhand der Zeichnung näher erläutert.

Es zeigen:
- Fig. 1: ein erstes Ausführungsbeispiel einer aus zwei Formteilen bestehenden Zahnbürste in Seitenansicht und teilweise im Längsschnitt;
- Fig. 2: die Zahnbürste nach Fig. 1 in Draufsicht;
- Fig. 3: die Zahnbürste nach Fig. 1 in Untersicht;
- Fig. 4: ein erstes Formteil der Zahnbürste nach Fig. 1 in Ansicht und teilweise im Längsschnitt;
- Fig. 5: das Formteil nach Fig. 4 in Draufsicht;
- Fig. 6: ein zweites Formteil der Zahnbürste nach Fig. 1 in Draufsicht;
- Fig. 7: einen Schnitt nach Linie VII-VII in Fig. 6;
- Fig. 8: eine Verbindungsstelle der beiden Formteile nach Fig. 1 im vergrösserten Massstab;
- Fig. 9: im vergrösserten Massstab einen Schnitt nach Linie IX-IX in Fig. 2;
- Fig. 10: ein zweites Ausführungsbeispiel einer aus zwei Formteilen bestehenden Zahnbürste in Seitenansicht;
- Fig. 11: die Zahnbürste nach Fig. 10 in Draufsicht; und
- Fig. 12: die Zahnbürste nach Fig. 10 im vergrösserten Massstab, in Seitenansicht und teilweise im Schnitt, wobei ein Verschlussteil zum Verschliessen eines Handgriff-Hohlraumes vom übrigen Zahnbürstenteil getrennt dargestellt ist.

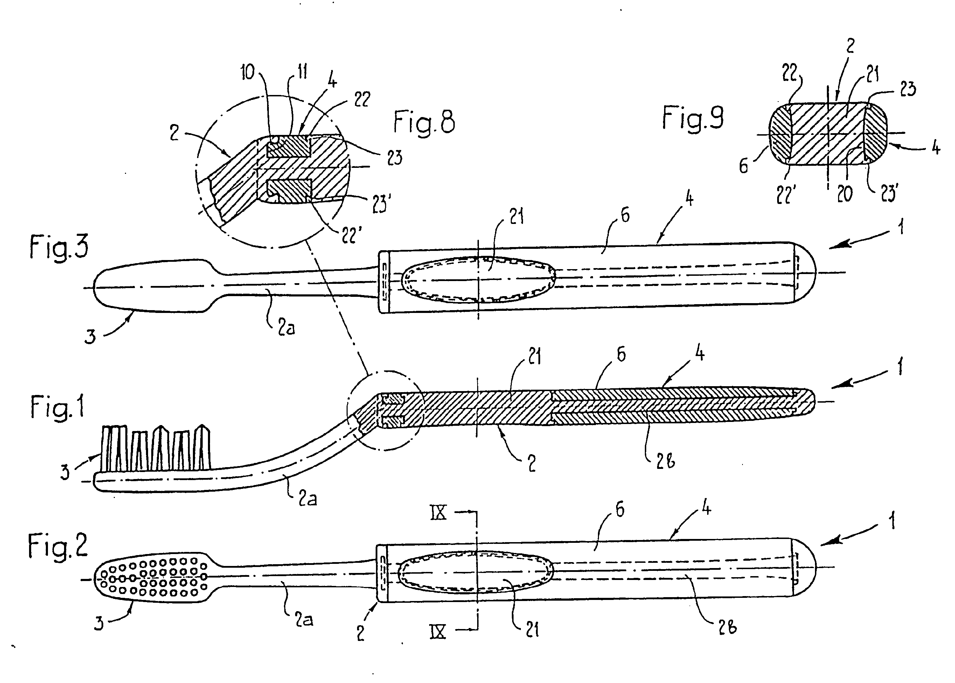

Gemäss Fig. 1 bis 3 weist eine Zahnbürste 1 ein erstes Formteil 2 auf, das in seinem vorderen Bereich 2a einen Bürstenkopf 3 trägt. Das erste, aus einem Kunststoff A bestehende Formteil 2 ist über einen Abschnitt seiner Länge, nämlich in seinem hinteren Handgriffbereich 2b, von einem zweiten, aus einem Kunststoff B bestehenden Formteil 4 umfasst und mit diesem in einer Art Schwindverbindung kraftschlüssig verbunden. Bei den Kunststoffen A und B handelt es sich um derartige Kunststoffe, die sich während des Spritzgiessvorganges an den Berührungsflächen nicht miteinander verbinden.

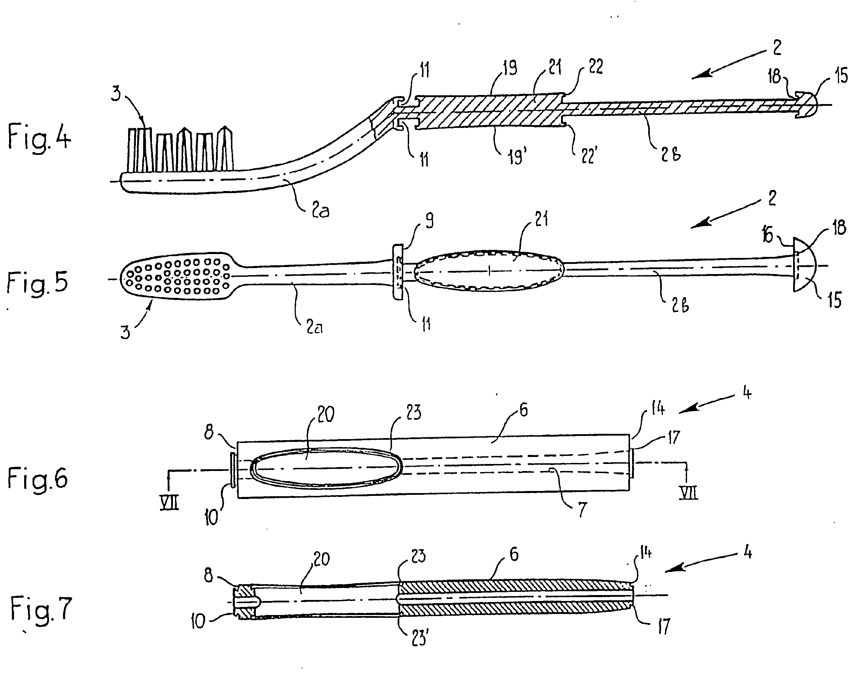

Zwecks besserer Anschaulichkeit sind die beiden Formteile 2, 4 in Fig. 4 bis 7 voneinander getrennt dargestellt. Die beiden Formteile 2, 4 weisen - wie weiter unten beschrieben wird - in ihrem Berührungsbereich gegengleiche, ineinandergreifende Vorsprünge bzw. Ausnehmungen auf, mittels welcher neben der kraftschlüssigen Verbindung beider Formteile 2, 4 zusätzlich eine formschlüssige Verbindung derselben realisiert wird. Diese Verbindung entsteht selbstverständlich erst während des Spritzgussvorganges, bei dem in einem ersten Schritt eines der Formteile und danach in einem zweiten Schritt das andere Formteil um das eine herum oder in dieses hinein gespritzt wird. Mit Vorteil wird beim unterschiedlichen Schwindmass beider Formteile 2, 4 zuerst dasjenige Formteil gespritzt, das aus Kunststoff mit geringerem Schwindmass hergestellt werden soll. Im zweiten Schritt erfolgt Spritzgiessen des anderen Formteils aus Kunststoff mit grösserem Schwindmass, wodurch ein natürlicher Anpressdruck des zweiten Kunststoffes gegenüber dem ersten Kunststoff entsteht.

Das zweite, in Fig. 6 und 7 einzeln dargestellte und im wesentlichen den Zahnbürsten-Handgriff bildende Formteil 4 ist hülsenförmig ausgestaltet, d.h. mit einer inneren Längsbohrung 7 versehen, die in ihrer Form und Durchmesser dem hinteren Handgriffbereich 2b des ersten, in Fig. 4 und 5 einzeln dargestellten Formteils 2 entspricht. Das hülsenförmige Formteil 4 weist eine Aussenfläche 6 auf.

Eine vordere Stirnfläche 8 des hülsenförmigen zweiten Formteils 4 ist in Längsrichtung der Zahnbürste gesehen einer Absatzfläche 9 des ersten Formteils 2 (Fig. 4) zugeordnet. Dabei ragt ein ringförmiger, vorderer Vorsprung 10 des zweiten Formteils 4 in eine gegengleiche Ausnehmungen 11 des ersten Formteils 2 hinein, was insbesondere aus Fig. 8 gut ersichtlich ist. Eine hintere Stirnfläche 14 des hülsenförmigen zweiten Formteils 4 ist einer Absatzfläche 16 eines Endstückes 15 des ersten Formteils 2 zugeordnet. Auch hier ragt ein ringförmiger, hinterer Vorsprung 17 des zweiten Formteils 4 in eine gegengleiche Ausnehmung 18 des Endstückes 15 hinein.

Das zweite Formteil 4 ist mit einer quer zur Längsbohrung 7 angeordneten, im Querschnitt ovalen, länglichen Querbohrung 20 ausgestattet, die für einen gegengleichen, die Querbohrung 20 durchdringenden Teil 21 des ersten Formteils 2 vorgesehen ist. Der ovale Teil 21 weist eine obere und eine untere Randfläche 22, 22' auf. Das zweite Formteil 4 ist mit die Querbohrung 20 umrandenden, den Randflächen 22, 22' gegengleichen Absatzflächen 23, 23' versehen. Die Randflächen 22, 22' und die Absatzflächen 23, 23' bilden wiederum eine Art Vorsprung/Ausnehmung-Formschlussverbindung zwischen den beiden Formteilen 2, 4.

Die Aussenfläche 6 des hülsenförmigen Formteils 4 bildet zusammen mit Aussenflächen 19, 19' (Fig. 4) des ovalen Teiles 21 eine Handgriffläche.

Was Material für die beiden Formteile 2, 4 anbelangt kann als Kunststoff A für das erste Formteil 2 mit Vorteil beispielsweise Polypropylen (PP) gewählt werden, während das zweite Formteil 4 beispielsweise aus folgenden Kunststoffen B bestehen kann:
Styrol-Acryl-Nitril (SAN) und Untergruppen,
Acryl-Butadien-Styrol (ABS) und Untergruppen,
Polyamid (PA) und Untergruppen,
Polycarbonat (PC) und Untergruppen,
Polyester (PBT) und Untergruppen, oder andere
transparente, sich mit Polypropylen (PP) nicht verbindende Kunststoffe.

Die jeweiligen Untergruppen umfassen die zur entsprechenden Familie gehörenden Kunststoffe.

Durch diese Materialkombination ergibt sich ein besonderer Vorteil. Da die heutigen Zahnputzmittel häufig aggressive Substanzen, wie z.B. Pfefferminzöl, enthalten, werden billige Kunststoffe wie z.B. SAN oft angegriffen. Ist das erste, den Bürstenkopf 3 tragende Formteil 2 aus gegen die aggressiven Stoffe resistentem, aber nicht vollständig durchsichtigem PP und das zweite, den Griff beinhaltende Formteil 4 aus durchsichtigem, aber weniger beständigem SAN, so liegt in dieser speziellen Ausgestaltungsform der Erfindung eine kostengünstig herstellbare Zahnbürste vor, die gegen die aggressiven Stoffe der Zahnputzmittel beständig ist und auch ästhetisch zu gefallen vermag. Natürlich kann statt des PP auch jeder andere beständige Kunststoff und statt des SAN beispielsweise einer der oben genannten, billigeren und in der Regel daher weniger beständigeren Kunststoffe verwendet werden.

Bei diesen Materialkombinationen wird in einem ersten Schritt vorzugsweise zuerst das zweite, hülsenförmige Formteil 4 mittels Spritzgiessens hergestellt. Anschliessend wird in einem zweiten Schritt das erste Formteil 2 gespritzt, wobei die bereits beschriebene formschlüssige Verbindung im Berührungsbereich beider Formteile 2, 4 entsteht. Durch das grössere Schwindmass des zuletzt gespritzten Materials A (PP) des ersten Teiles 2 entsteht ein natürlicher Anpressdruck gegenüber dem aus Material B (z.B. SAN) bestehenden zweiten Teil 4, und es wird eine kraft- und formschlüssige Verbindung beider Formteile 2, 4 durch Ineinandergreifen der Vorsprünge 10, 17, 22, 22' in Ausnehmungen 11, 18, 23, 23' bewerkstelligt, ohne dass sich zwischen den sich eigentlich nicht verbindenden Kunststoffen A, B Spalte bilden, in die Wasser und Verunreinigungen eindringen können oder die gar zu einem Bruch führen könnten.

Als Beispiel wurde eine aus zwei Formteilen 2, 4 bestehende Zahnbürste 1 dargestellt und beschrieben. Eine andere Ausgestaltung der beiden Formteile wäre durchaus möglich. Die hülsenförmige Ausgestaltung eines der Formteile ist nicht zwingend notwendig.

Selbstverständlich könnte eine Zahnbürste auch mehrere Formteile aus sich während des Spritzgiessvorganges miteinander nicht verbindenden Kunststoffen aufweisen, die miteinander in einer kraft- und/oder formschlüssigen Verbindung stehen.

Es könnten aber auch aus zwei oder mehreren Kunststoffkomponenten bestehende Formteile, bei denen z.B. eine (oder mehrere) Komponente des einen Formteiles mit einer (oder mehreren) Komponente des anderen Formteiles nicht verbindbar ist, miteinander kraft- und/oder formschlüssig verbunden werden.

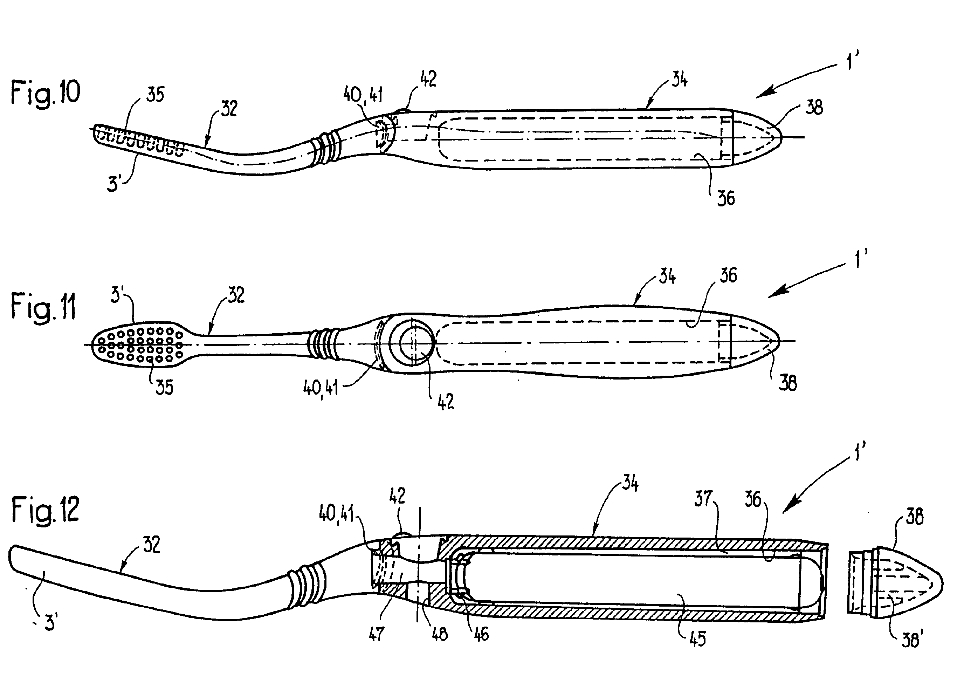

In Fig. 10 und 11 ist ein zweites Ausführungsbeispiel einer Zahnbürste 1' dargestellt, die ebenfalls zwei aus verschiedenen, sich während des Spritzgiessvorganges miteinander nicht verbindenden Kunststoffen A und B bestehende Formteile 32, 34 aufweist. Auch hier bildet das erste Formteil 32 einen den Bürstenkopf 3' tragenden Zahnbürstenteil (in Fig. 10 und 11 sind die Borsten des Bürstenkopfes 3' nicht dargestellt; es sind lediglich die zur Verankerung von Borstenbüscheln vorgesehene Vertiefungen 35 ersichtlich). Das zweite Formteil 34 bildet einen Zahnbürsten-Handgriff. Dieser ist über einen Teil seiner Länge mit einer zylindrischen Aussparung 36 versehen, durch welche ein nach hinten offener und mittels eines Verschlussteils 38 verschliessbarer Hohlraum 37 im Zahnbürsten-Handgriff gebildet ist. Das zweite Formteil 34 besteht vorzugsweise aus einer wenigstens teilweise transparenten oder transluzenten Materialkomponente, beispielsweise SAN, so dass im Hohlraum 37 verschiedene ästhetisch wirkende Mittel sichtbar untergebracht werden können (lose Gegenstände, Flüssigkeit, Pulver, bedruckte Rollen etc.). Der Verschlussteil 38 kann unlösbar oder lösbar mit dem zweiten Formteil 34 verbunden werden. Im letzteren Fall können im Hohlraum 37 beispielsweise auch Nutzgegenstände wie Zahnstocher oder Ampulle mit Mundwasser oder Zahnpasta untergebracht werden.

Auch bei dieser Zahnbürsten-Ausführungsform sind die Berührungsflächen beider Formteile 32, 34 mit ineinandergreifenden Teilen 40, 41 versehen, so dass die beiden Kunststoffteile beim Spritzgiessen in eine kraftund formschlüssige Verbindung gebracht werden. Die ineinandergreifenden Teile 40, 41 sind beispielsweise durch einen Vorsprung 40 an der Stirnseite des den Handgriff bildenden Formteils 34 und eine gegengleiche Ausnehmung 41 an der Stirnseite des anderen Formteils 32 gebildet.

Wird der Handgriff aus dem transparenten SAN hergestellt, so wird auch bei dieser Ausführungsform vorzugsweise zuerst dieses handgriffbildende Formteil 34 im Spritzgiessverfahren hergestellt und anschliessend das den Bürstenkopf tragende Formteil 32 beispielsweise aus beständigerem Polypropylen gespritzt.

Sowohl der borstentragende Teil der Zahnbürste als auch der Handgriff können aus weiteren Materialkomponenten bestehende Teile aufweisen. So kann z.B. im Formteil 34 eine Vertiefung für eine Daumenauflage 42 aus einer weiteren Materialkomponente, beispielsweise aus einem thermoplastischen Elastomer (TPE), vorgesehen.

Die in Fig. 12 gezeigte Zahnbürste entspricht der Zahnbürste 1' nach Fig. 10 und 11, ist jedoch gegenüber der Fig. 10 in einem vergrösserten Massstab und teilweise im Schnitt dargestellt (die gleichen Teile sind mit den gleichen Bezugsziffern bezeichnet). Diese Zahnbürste 1' ist zum Einsetzen von verschiedentlich gefüllten Ampullen 45 vorgesehen, für die eine Halterung 46 aus einem elastisch nachgiebigen Kunststoff im vorderen Bereich der Aussparung 36 vorhanden ist. Der Verschlussteil 38 ist im Innern mit einer elastisch nachgiebigen Gegenhalterung 38' versehen. Die Ampulle 45 wird durch die beiden Halterungen 36, 38' sowohl radial, als auch axial in ihrer Lage gehalten. Die Halterung 36 kann beispielsweise aus dem gleichen Kunststoff (vorzugsweise aus PP) und im gleichen Schritt mit dem den Bürstenkopf 3' tragenden Formteil 32 gespritzt werden (der dafür vorhandene Verbindungskanal ist in Fig. 12 mit 47 bezeichnet). Aus dem gleichen Kunststoff und im gleichen Schritt kann auch eine Querbohrung 48 im zuerst gespritzten Formteil 34 (beispielsweise aus SAN) gefüllt werden, wodurch auf der Aussenseite des Handgriffes die Daumenauflage 42 gebildet wird.

Die Ampullen 45 können verschiedene ästhetisch wirkende Gegenstände (lose oder in einer Flüssigkeit schwebend), Flüssigkeit, Pulver etc. beinhalten.

## Patentansprüche

1. Verfahren zur Herstellung einer Zahnbürste (1;1') mittels Spritzgiessen, bei welchem ein einen Bürstenkopf (3;3') tragendes Formteil (2;32) und ein zumindest einen Teil eines zahnbürsten-Handgriffs bildendes Formteil (4;34) gespritzt werden, wobei das eine Formteil (2;32) das andere Formteil (4;34) zumindest teilweise umfasst und die beiden Formteile (2,4;32,34) aus sich während des Spritzgiessens nicht miteinander verbindenden Kunststoffen (A,B) gespritzt werden, **dadurch gekennzeichnet, dass** in einem ersten Schritt das zumindest einen Teil des Zahnbürsten-Handgriffs bildende Formteil (4;34) und in einem zweiten Schritt das den Bürstenkopf (3;3') tragende Formteil (2;32) gespritzt werden und im zweiten Schritt der Kunststoff (A) zum Bilden des den Bürstenkopf (3;3') tragenden Formteils (2;32) um das zumindest einen Teil des Zahnbürsten-Handgriffs bildende Formteil (4;34) herum oder in dieses hinein gespritzt wird, um dieses zur Bildung einer Schwindverbindung zumindest teilweise zu umfassen, und dass wenigstens eines der Formteile (2,4;32,34) mit aus einer weiteren Materialkomponente bestehenden Teilen (42) versehen wird.

2. Verfahren nach Anspruch 1, **dadurch gekennzeichnet, dass** die Kunststoffe (A,B) ein unterschiedliches Schwindmass aufweisen, und das Schwindmass des im ersten Schritt verwendeten Kunststoffs (B) geringer ist als jenes des im zweiten Schritt verwendeten Kunststoffs (A).

3. Verfahren nach einem der Ansprüche 1 oder 2, **dadurch gekennzeichnet, dass** im ersten Schritt ein Kunststoff (B) verwendet wird, der gegen Pfefferminzöl enthaltendes Zahnputzmittel weniger beständig ist als der im zweiten Schritt verwendete Kunststoff (A).

4. Verfahren nach einem der Ansprüche 1 oder 2, **dadurch gekennzeichnet, dass** im ersten Schritt ein transparenter Kunststoff (B) verwendet wird.

5. Verfahren nach dem Anspruch 1 oder 2, **dadurch gekennzeichnet, dass** im ersten Schritt Styro-Acryl-Nitril, Acryl-Butadien-Styrol, Polyamid, Polycarbonat oder Polyester verwendet wird.

6. Verfahren nach einem der Ansprüche 1 bis 5, **dadurch gekennzeichnet, dass** im zweiten Schritt Polypropylen verwendet wird.

7. Verfahren nach einem der Ansprüche 1 bis 6, **dadurch gekennzeichnet, dass** im ersten Schritt am zumindest einen Teil des Zahnbürsten-Handgriffs bildenden Formteil (4;34) wenigstens an einem Teil von dessen Berührungsfläche mit dem den Bürstenkopf (3;3') tragenden Formteil (2;32) vorzugsweise ringförmige Vorsprünge (10,17;40) oder Ausnehmungen und im zweiten Schritt am den Bürstenkopf (3;3') tragenden Formteil (2;32) gegengleiche Ausnehmungen (11,18;41) beziehungsweise Vorsprünge gebildet werden, die mit den Vorsprüngen oder Ausnehmungen am zumindest einen Teil des Zahnbürsten-Handgriffs bildenden Formteil (4;34) in Eingriff sind.

8. Verfahren nach einem der Ansprüche 1 bis 7, **dadurch gekennzeichnet, dass** wenigstens eines der beiden Formteile (2,32 bzw. 4;34) aus zwei oder mehreren Kunststoffkomponenten hergestellt wird, von denen wenigsten eine mit dem Kunststoff (A bzw. B) des anderen Formteils nicht verbindbar ist.

9. Verfahren nach Anspruch 8, **dadurch gekennzeichnet, dass** als eine der Kunststoffkomponenten ein thermoplastisches Elastomer verwendet wird,

10. Verfahren nach einem der Ansprüche 1 bis 9, **dadurch gekennzeichnet, dass** das zumindest einen Teil des Zahnbürsten-Handgriffs bildende Formteil (4) hülsenförmig und mit einer vorderen und einer hinteren Stirnfläche (8;14) ausgestaltet wird, und beim zweiten Schritt am den Bürstenkopf (3) tragenden Formteil (2) eine mit der vorderen Stirnfläche (8) zusammenwirkende Absatzfläche (9) und eine mit der hinteren Stirnfläche (14) zusammenwirkende weitere Absatzfläche (16) gebildet wird.

11. Verfahren nach Anspruch 10, **dadurch gekennzeichnet, dass** an der vorderen und/oder hinteren Stirnflächen (8,14) ringförmige Vorsprünge (10,17) ausgebildet werden, zur formschlüssigen Verbindung mit dem den Bürstenkopf (3) tragenden Formteil (2).

12. Verfahren nach einem der Ansprüche 1 bis 8, **dadurch gekennzeichnet, dass** im ersten Schritt ein den Zahnbürsten-Handgriff bildendes Formteil (34) mit einem Vorsprung (40) an einer Stirnseite gebildet wird, und im zweiten Schritt das den Bürstenkopf (3') tragende Formteil (32) mit einer zum Vorsprung (40) gegengleichen Ausnehmung angespritzt wird.

13. Verfahren nach einem der Ansprüche 1 bis 12, **dadurch gekennzeichnet, dass** im ersten Schritt am zumindest einen Teil des Zahnbürsten-Handgriffs bildenden Formteils (4,34) eine Querbohrung (20,48) ausgebildet wird, die für die Aufnahme eines gegengleichen Teils (21) des den Bürstenkopf tragenden Formteils (2,32) bestimmt ist.

## Claims

1. A method of producing a toothbrush (1, 1') by means of injection molding, wherein a molded part (2; 32) bearing a brush head (3, 3') and a molded part (4; 34) forming at least part of a toothbrush handle are injection-molded, wherein the one molded part (2; 32) at least partially encloses the other molded part (4; 34) and the two molded parts (2, 4; 32, 34) are injection-molded from plastic materials (A, B), which do not bond with one another during the injection-molding operation,
**characterized in that** the molded part (4; 34) forming at least part of the toothbrush handle is injection-molded in a first step and the molded part (2; 32) bearing the brush head (3, 3') is injection-molded in a second step and during the second step, the plastic material (A) for forming the molded part (2; 32) bearing the brush head (3, 3') is injection-molded around or into the molded part (4; 34) forming at least part of the toothbrush handle, in order to at least partially enclose the latter in the manner of a shrink fit, and **in that** at least one of the molded parts (2, 4; 32, 34) is provided with parts (42) consisting of a further material component.

2. Method according to claim 1, **characterized in that** the plastic materials (A, B) have a different degree of shrinkage and **in that** the degree of shrinkage of the plastic material (B) used in the first step is lower than that of the plastic material (A) used in the second step.

3. Method according to one of claims 1 or 2, **characterized in that** a plastic material (B) is used in the first step, which is less resistant to tooth-cleaning agents containing peppermint oil than the plastic material (A) used in the second step*.

4. Method according to one of claims 1 or 2, **characterized in that** a transparent plastic material (B) is used in the first step.

5. Method according to claim 1 or 2, **characterized in that** styrene acrylonitrile or acrylonitrile-butadiene styrene or polyamide or polycarbonate or polyester is used in the first step.

6. Method according to one of claims 1 to 5, **characterized in that** polypropylene is used in the second step.

7. Method according to one of claims 1 to 6, **characterized in that**, in the first step, preferably annular projections (10, 17; 40) or recesses are formed on at least part of the contact surface of the molded part (4; 34) forming at least part of the toothbrush handle with the molded part (2; 32) bearing the brush head (3, 3'), and, in the second step, opposite-fitting recesses (11, 18; 41) or projections, which engage with the projections or recesses on the molded part (4; 34) forming at least part of the toothbrush handle, are formed on the molded part (2; 32) bearing the brush head (3; 3').

8. Method according to one of claims 1 to 7, **characterized in that** at least one of the two molded parts (2; 32 and 4; 34, respectively) is produced from two or more plastic components, of which at least one cannot be bonded with the plastic material (A and B, respectively) of the other molded part.

9. Method according to claim 8, **characterized in that** a thermoplastic elastomer is used as one of the plastic components.

10. Method according to one of claims 1 to 9, **characterized in that** the molded part (4) forming at least part of the toothbrush handle is designed in the form of a sleeve and with a front and a rear end face (8; 14), and in the second step, an offset surface (9) cooperating with the front end face (8) and a further offset surface (16) cooperating with the rear end face (14) are formed on the molded part (2) bearing the brush head (3).

11. Method according to claim 10, **characterized in that** annular projections (10, 17) are provided at the front and/or the rear end faces (8, 14) for forming a positive fit with the molded part (2) bearing the brush head (3).

12. Method according to one of claims 1 to 8, **characterized in that** a molded part (34) forming the toothbrush handle and having a projection (40) on an end face is produced in the first step, and the molded part (32) bearing the brush head (3') and having a diametrically opposed recess to the projection (40) is injection-molded thereupon in the second step.

13. Method according to one of claims 1 to 12, **characterized in that** a cross-bore (20, 48) is produced on the molded part (4; 34) forming at least part of the toothbrush handle in the first step, said cross-bore (20, 48) being intended for receiving a diametrically opposed part (21) of the molded part (2; 32) bearing the brush head.

## Revendications

1. Procédé de fabrication d'une brosse à dents (1; 1') par moulage par injection, dans lequel une pièce moulée (2; 32) pourvue d'une tête de brosse (3, 3'), et un pièce moulée (4; 34) formant au moins une partie d'un manche de brosse à dents sont injectées, l'une pièce moulée (2; 32) entoure au moins en partie l'autre pièce moulée (4; 34), et les deux pièces moulées (2, 4 ; 32, 34) sont injectées en des matières plastiques (A, B) qui ne s'allient pas entre elles pendant l'opération de moulage par injection,
**caractérisée en ce que** la pièce moulée (4; 34) formant au moins une partie du manche de la brosse à dents est injecté dans une première phase, et la pièce moulée (2; 32) pourvue de la tête de brosse (3; 3') est injectée dans une seconde phase, et dans la seconde phase, la matière plastique (A), pour former la pièce moulée (2; 32) pourvue de la tête de brosse (3; 3') est injectée autour ou dans la pièce moulée (4; 34) formant au moins une partie du manche de la brosse à dents pour l'entourer au moins en partie en formant un assemblage par contraction, et **en ce que** au moins une des deux pièces moulées (2, 4; 32, 34) est pourvue des autres parties (42) composées d'un autre composant.

2. Procédé selon la revendication 1, **caractérisé en ce que** les matières plastiques (A, B) ont un degré de contraction différente, et le degré de contraction de la matière plastique (B) utilisée dans la première phase est inférieur à celui de la matière plastique (A) utilisée dans la seconde phase.

3. Procédé selon l'une quelconque des revendications 1 ou 2, **caractérisé en ce que** dans la première phase, une matière plastique (B) est utilisée qui est moins résistante à un dentifrice contenant de l'essence de menthe que la matière plastique (A) utilisée dans la seconde phase.

4. Procédé selon l'une quelconque des revendications 1 ou 2, **caractérisé en ce qu'**une matière plastique (B) transparente est utilisée dans la première phase.

5. Procédé selon l'une quelconque des revendications 1 ou 2, **caractérisé en ce qu'**on utilise du styrène-acrylo-nitrile, d'acrylonitrile-butadiène-styrène, du polyamide, du polycarbonate ou du polyester dans la première phase.

6. Procédé selon l'une quelconque des revendications 1 à 5, **caractérisé en ce qu'**on utilise du polypropylène dans la seconde phase.

7. Procédé selon l'une quelconque des revendications 1 à 6, **caractérisé en ce que**, dans la première phase, des saillies (10, 17; 40) ou des creux préférablement annulaires sont formées sur la pièce moulée (4; 34) formant au moins une partie du manche de la brosse à dents, au moins sur une partie de la surface de contact avec la pièce moulée (2; 32) pourvue de la tête de brosse (3; 3') et, dans la seconde phase, des creux (11, 18; 41), ou des saillies diamétralement opposé sont formées, qui s'engagent avec les saillies ou creux de la pièce moulée (4; 34) formant au moins une partie du manche de la brosse à dents.

8. Procédé selon l'une quelconque des revendications 1 à 7, **caractérisé en ce qu'**au moins une des deux pièces moulées (2, 4; 32, 34) est composée de deux ou de plusieurs constituants de matières plastiques, desquelles au moins une ne s'alliant pas avec la matière plastique (A ou B) de l'autre pièce moulée.

9. Procédé selon la revendication 8, **caractérisé en ce qu'**un des constituants de matières plastiques utilisé est un élastomère thermoplastique.

10. Procédé selon l'une quelconque des revendications 1 à 9, **caractérisé en ce que** la pièce moulée (4) formant au moins une partie du manche de la brosse à dents est en forme de manchon et munie d'une surface frontale avant ou arrière (8; 14), et une surface d'épaulement (9) associée à la surface frontale avant (8) et une autre surface d'épaulement (16) associée à la surface frontale arrière (14) sont formées dans la seconde phase.

11. Procédé selon l'une quelconque des revendications 1 à 10, **caractérisé en ce que** des saillies annulaires sont formées sur la surface frontale avant ou arrière (8, 14) pour réaliser un assemblage par coopération avec la pièce moulée (2) pourvue de la tête de brosse (3).

12. Procédé selon l'une quelconque des revendications 1 à 8, **caractérisé en ce que**, dans la première phase, une pièce moulée (34) avec une saillie (40) sur une surface frontale formant la partie du manche de la brosse à dents est formée, et la pièce moulée (32) pourvue de la tête de brosse (3') avec un creux diamétralement opposé à la saillie est injectée ci-dessus dans la seconde phase.

13. Procédé selon l'une quelconque des revendications 1 à 12, **caractérisé en ce que**, dans la première phase, un trou transversal (20, 48) est formée dans la pièce moulée (4; 34) formant au moins une partie du manche de la brosse à dents, lequel trou transversal est prévu pour la réception d'une pièce (21) diamétralement opposé à la pièce moulée (2; 32) pourvue de la tête de brosse.
